Europäisches Patentamt

European Patent Office

Office européen des brevets

(19)

(11) **EP 1 197 584 A1**

(12) **DEMANDE DE BREVET EUROPEEN**

(43) Date de publication:
**17.04.2002 Bulletin 2002/16**

(51) Int Cl.7: **C23C 18/16**

(21) Numéro de dépôt: **00810931.6**

(22) Date de dépôt: **10.10.2000**

(84) Etats contractants désignés:
**AT BE CH CY DE DK ES FI FR GB GR IE IT LI LU MC NL PT SE**
Etats d'extension désignés:
**AL LT LV MK RO SI**

(71) Demandeur: **BTG Eclépens S.A.**
**1312 Eclépens (CH)**

(72) Inventeurs:
• **Adamou Brah, Ibrahim**
**1162 St-Prex (CH)**

• **Fretti, Silvano**
**1162 St-Prex (CH)**

(74) Mandataire: **Schulz, Jean-Alain et al**
**ABREMA,**
**Agence Brevets et Marques,**
**Ganguillet & Humphrey,**
**Avenue du Théâtre 16,**
**Case Postale 2065**
**1002 Lausanne (CH)**

(54) **Lame de couchage et procédé de fabrication d'une lame de couchage**

(57)     Lame de couchage portant un revêtement comprenant une matrice à base de nickel et des particules de céramique, de diamant ou de carbure dispersées dans ladite matrice, au moins sur la partie fonctionnelle de ladite lame.

FIG.4b

EP 1 197 584 A1

**Description**

La présente invention concerne une lame de couchage ainsi qu'un procédé de fabrication d'une lame de couchage.

Les lames de couchage utilisées dans l'industrie papetière pour la fabrication de papier couché se présentent généralement sous forme d'une lame d'acier-ressort, c'est-à-dire d'acier trempé et revenu de 5 à 12 cm de large, de 0,2 à 1 mm d'épaisseur, à bords droits ou chanfreinés, et dont la longueur peut atteindre plusieurs mètres. Généralement montées dans un porte-lame, elles sont destinées à assurer un dépôt régulier et constant d'une « sauce » sur un papier à coucher, le bord fonctionnel de la lame, par exemple la zone chanfreinée, étant placé en regard de la surface de la bande de papier en défilement et en contact avec la sauce. Le caractère abrasif des composants de la sauce entraîne l'usure de la lame, de sorte que le poids de couche varie avec le temps et que le dépôt devient irrégulier, ce qui rend difficile le maintien d'une qualité constante de papier. La durée de vie moyenne d'une lame d'acier est de l'ordre de 4 à 8 heures. Cela entraîne de nombreux arrêts machine pour le changement de lame et abaisse sensiblement le rendement d'exploitation.

Pour augmenter la durée de vie des lames, on a proposé de revêtir des lames en acier souple d'un revêtement dur sur la partie fonctionnelle de la lame, c'est-à-dire sur la zone où celle-ci entre en contact avec la sauce. Le brevet US 4,660,599 décrit une lame dont la partie fonctionnelle est revêtue au moyen d'une technique de projection thermique d'un revêtement de céramique, par exemple de l'oxyde d'aluminium ou du dioxyde de titane. Le revêtement est obtenu par projection successive de plusieurs couches de particules sur la partie fonctionnelle d'une bande-lame, qui est ensuite tronçonnée en lames.

Le brevet GB 978,988 décrit une lame de crèpage avec un revêtement de particules de céramique, obtenu par technique de « flame plating » de particules de céramique sur une arête d'une bande d'acier qui deviendra, après tronçonnage de la bande en lames, la partie fonctionnelle de la lame.

Le document GB 1,298,609 décrit également une lame de crèpage en acier comportant près de son arête fonctionnelle une bande de céramique déposée dans une canelure longitudinale par technique de flame spraying.

Le document WO 86/07309 décrit une lame de couchage dont la zone fonctionnelle est revêtue d'un dépôt de molybdène ou d'alliage de molybdène par technique de flame spraying.

Les lames précités ont une durée de vie nettement plus élevées que celles de lames en acier nues et peut atteindre environ 20 heures. Toutefois, l'examen des papiers couchés à l'aide de lames revêtues de céramique montre des défauts de couchage, notamment des microstriures, ce qui est refusé pour des papiers de haute qualité.

On connaît également des lames chromées par dépôt électrolytique. Ces lames produisent également des papiers couchés présentant des défauts de couchage, dus aux procédés de dépôt électrolytique, qui ne peuvent être évités que par une opération de finition des lames après chromage, qui augmente leur prix de revient.

Le but de la présente invention est d'offrir une lame de couchage ayant une durée de vie élevée et qui ne provoque pas les défauts de couchage constatés avec les lames revêtues précitées.

Ces buts sont atteints grâce à une lame portant un revêtement comprenant une matrice à base de nickel et des particules de céramique, de diamant ou de carbure dispersées dans ladite matrice, au moins sur la partie fonctionnelle de ladite lame. Une telle lame peut être obtenue par un procédé de fabrication comprenant une étape de codéposition chimique d'un revêtement comprenant une matrice à base de nickel et des particules de céramique sur la partie fonctionnelle d'une bande-lame en acier.

La bande-lame peut être plongée dans un bain comprenant au moins un sel de nickel, un réducteur de Ni$^{++}$ et des particules de céramique en suspension qui sont codéposées en même temps qu'une matrice dont le nickel est le composant majoritaire. La codéposition chimique, dite encore dépôt « électroless» assure une régularité de dépôt remarquable, sans surépaisseurs, notamment sur les arêtes de la lame. La qualité de couchage obtenue est excellente, semblable à celle obtenue avec une lame d'acier souple, neuve, et le papier ne présente pas de microstriures. D'autre part, grâce aux particules de céramique, l'usure du revêtement est fortement réduite, et la stabilité dans le temps des caractéristiques du couchage est nettement augmentée: la durée de vie de la lame est proche de celle d'une lame à revêtement entièrement en céramique.

Les particules de céramique sont de préférence choisies parmi les particules mouillables par le bain, inertes vis-à-vis de ses constituants chimiques et dont la surface n'est pas catalytique(c'est-à-dire non apte au dépôt de Ni). Les particules de céramique ont de préférence des diamètres entre 0,5 à 10 $\mu$m.

Pour diminuer le frottement lame/sauce/papier, on peut codéposer dans la matrice à base de nickel des particules d'un lubrifiant solide, par exemple du polytétrafluoroéthylène (PTFE), mélangées aux particules dures. Pour ce faire, on ajoute des particules de PTFE en suspension dans le bain. La proportion de particules dans le revêtement varie de préférence entre 5 et 40% en volume, cette proportion étant choisie selon les applications.

De préférence, avant l'imersion dans le bain chimique, la bande-lame subit une préparation qui peut comprendre un nettoyage et/ou un dégraissage et/ou un brossage et/ou un électropolissage et/ou une attaque anodique.

Au lieu de revêtir la totalité de la bande-lame, on peut se contenter de revêtir la portion voisine d'un bord latéral, qui deviendra la partie fonctionnelle de la lame, en masquant les surfaces qui ne sont pas destinées à être revêtues. Pour ce faire, et pour minimiser le volume d'un bain de codéposition, on peut enrouler la bande-lame sur un support, de préférence sur une roue-support en formant un enroulement hélicoïdal, les spires de cet enroulement étant séparées les unes des autres par une bande intercalaire constituée d'un matériau inerte vis-à-vis des constituants du bain et dont la surface est non catalytique, de sorte que le nickel ne se dépose pas dessus. De préférence, pendant le processus de codéposition, le support est animé d'un mouvement lent, par exemple une rotation lente de la roue autour de son axe, pour améliorer la régularité du dépôt. En ne revêtant que la partie fonctionnelle, non seulement on économise des réactifs, mais on évite de modifier les propriétés élastiques de la bande d'acier dans son ensemble. Une bande totalement revêtue sur toute sa surface pourrait présenter un moment de flexion transversale trop important pour certaines applications.

Après l'étape de codéposition, la bande-lame ou les lames tronçonnées peuvent être soumises à un traitement thermique pour modifier les propriétés physiques du revêtement, en particulier pour augmenter sa dureté. Par contre, étant donné la régularité du dépôt obtenu par codéposition chimique, la lame ne nécessite pas de traitement mécanique complémentaire de rectification tel que ponçage, meulage, etc.

D'autres caractéristiques et avantages du procédé selon l'invention et des lames obtenues par ce procédé apparaîtront à l'homme du métier de la description détaillée ci-dessous, en relation avec le dessin, dans lequel :

- les fig. 1a et 1b représentent schématiquement respectivement une bande-lame enroulée avec une bande intercalaire sur une roue-support et une vue de détail agrandie de la même ;
- la fig. 2 est une vue schématique de la bande-lame sur sa roue-support, plongée dans un bain de codéposition chimique ;
- les fig. 3a, 3b et 3c représentent respectivement une vue en coupe, une vue de dessus et une vue de dessous d'une lame revêtue ;
- les fig. 4a et 4b sont deux microphotographies d'une lame revêtue aux grossissements respectifs de 100 fois et 200 fois ;
- la fig. 5 montre des performances comparatives de 3 types de lame.

Le procédé selon l'invention utilise la réduction contrôlée de $Ni^{++}$ sur une surface catalytique par un agent réducteur, sans courant électrique et donc sans réaction électrolytique, l'énergie de la réaction étant fournie par la chaleur du bain. L'agent réducteur est de préférence un hypophosphite, un aminoborane ou un borohydrure, de sorte que la réaction chimique entraîne le dépôt d'une matrice Ni-P ou de Ni-B. Cette technique de dépôt de revêtements de Nickel est connue en soi, notamment dans les industries automobiles et aéronautiques.

Un bain est constitué de :

- une source de nickel. Il s'agit généralement d'un sel de nickel, en particulier chlorure ou sulfate de nickel ;
- un agent réducteur de $Ni^{++}$ : les réducteurs les plus couramment utilisés sont des hypophosphites alcalins tels que l'hypophosphite de sodium, ou des amino-boranes notamment le N-dimethylborane (DMBA) ou le N-diéthylborane (DEAB), ou des borohydrures alcalins tel que le borohydrure de sodium ;
- un additif pour mieux contrôler le dépôt de Ni et le circonscrire à la surface destinée à recevoir le dépôt, souvent appelée surface catalytique ; on peut employer notamment l'acide citrique ou l'acide glycolique.
- un tampon pour contrôler le pH, tels que des tampons acetate, propionate ou succinate.
- optionnellement un accélérateur de réaction, tel que l'acide succinique, ou
- un inhibiteur pour limiter la vitesse de réaction, par exemple un molybdate ou un composé sulfureux tel que la thiourée.

Dans les bains à base d'hypophosphite, les mécanismes chimiques peuvent être résumés, de façon non-exhaustive, par les réactions suivantes :

$$(H_2PO_2)^- + H_2O \rightarrow H^+ + (HPO_3)^{2-} + 2H \qquad (1)$$

$$Ni^{2+} + 2H \rightarrow Ni + 2H^+ \qquad (2)$$

$$(H_2PO_2)^- + H \rightarrow H_2O + OH^- + P \qquad (3)$$

$$(H_2PO_2)^- + H_2O \rightarrow H^+ + (HPO_3)^{2-} + H_2 \tag{4}$$

Parmi les produits de la réaction, on notera en particulier

- la production de $H^+$, ce qui entraîne l'abaissement progressif du pH du bain et de la vitesse de déposition et augmente la teneur en P du dépôt. Pour contrôler la vitesse de déposition et la teneur en P, on utilise d'une part des tampons tels que ceux précités, et d'autre part on peut, après titration périodique du bain, ajuster le pH de la solution tout au long de l'étape de déposition.

- la formation de $(HPO_3)^{2-}$ : son accumulation entraîne la codéposition d'orthophosphites avec Ni et P, donnant un dépôt poreux avec beaucoup de tensions internes. L'ajout d'acide citrique augmente la solubilité de $(HPO_3)^{2-}$ et évite son dépôt.

Dans les bains à base d'hypophosphites, la température doit être maintenue entre 85 et 95 °C. 5 kg d'hypophosphite de sodium sont en moyenne nécessaires pour réduire 1 kg de Ni.
Dans les bains à base d'aminoboranes, on peut opérer à plus faible température, de l'ordre de 60 à 75°, et à des valeurs de pH comprises entre 5 et 9. L'abaissement du pH du fait de la réaction de dépôt est moins important que dans le cas des bains d'hypophosphites et nécessite une moindre correction. L'accumulation du sous-produit de réaction $(BO_2)^-$ a peu d'effet sur le processus de déposition de Ni-B.
Dans les bains à base de borohydrures, le pH doit par contre être réajusté et maintenu en permanence audessus de 12, par exemple à l'aide d'hydroxyde alcalin, pour éviter la décomposition du réactif. Les borohydrures sont les agents réducteurs de nickel les plus puissants : 0,6 kg suffisent à réduire 1 kg de nickel.

Exemples de bain

Exemple 1 :

Chlorure de Ni (45 g/l)
Hypophosphite de Na (11 g/l)
Chlorure d'Amonium (50 g/l)
Citrate de Na (100 g/l)
A un pH = 8,5-10 et à une température = 90 - 95°C, la vitesse de dépôt est de l'ordre de 10 μm/h

Example 2 :

Sulfate de Ni (21 g/l)
Hypophosphite de Na (24 g/l)
Acide lactique (28 g/l)
Acide propionique (2,2 g/l)
A un pH = 4-6 et à une température = 88-95°C, la vitesse de dépôt est de l'ordre de 25 μm/h

Example 3 :

Chlorure de Ni (30 g/l)
DEAB (3 g/l)
Isopropanol (50 g/l)
Citrate de Na (10 g/l)
Succinate de Na (20 g/l)
A un pH = 5-7 et à une température = 65°C, la vitesse de dépôt est de 7-12 μm/h

Example 4 :

Chlorure de Ni (30 g/l)
DMAB (3-4,8 g/l)
Acétate de K (18-37 g/l)
A un pH = 5,5 et à une température = 70°C, la vitesse de dépôt est de l'ordre de 7 à 12 μm/h

Example 5 :

Chlorure de Ni (21 g/l)
Borohydrure de Na (0,4 g/l)
Hydroxyde de Na (90 g/l)
1,2- Diaminoéthane (90 g/l)
Sulfate de Thallium (0,4 g/l)
A un pH de 12,5-13 et à une température de 90-95°C, la vitesse de dépôt atteint 25-30 μm/h.

Les conditions opératoires des bains sont ajustées et maintenues de telle sorte que dans le revêtement, une matrice Ni-P comprend 5-11% en poids de P ou qu'une matrice de Ni-B comporte 2-6% en poids de B.

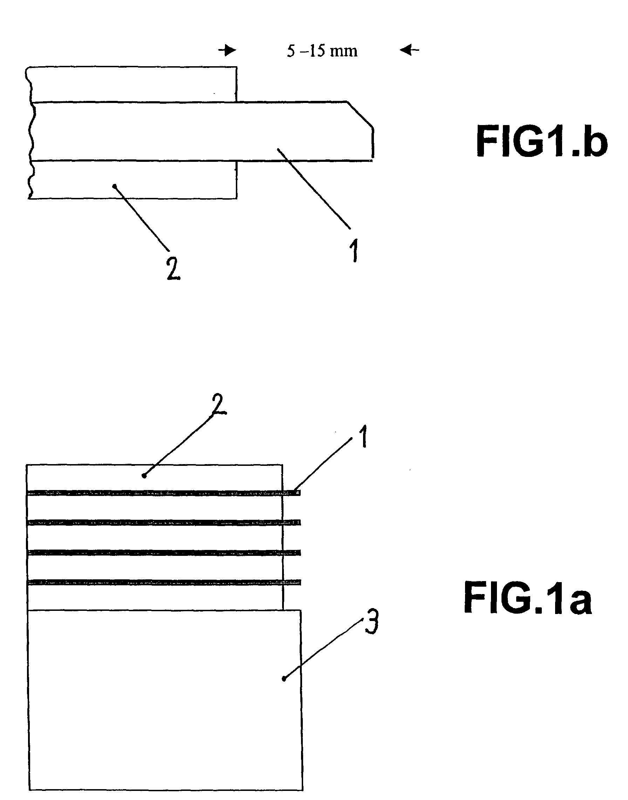

La fig. 1a représente schématiquement une bande-lame 1 enroulée avec une bande intercalaire 2 de matériau non catalytique sur une roue-support 3. La fig. 1b montre une vue de détail agrandie de la même, prête pour le traitement. Seul le bord fonctionnel de la future lame reste dégagé de l'enroulement de la bande intercalaire, typiquement sur une largeur de 5 à 15mm. Mais cette largeur peut être inférieure ou supérieure à ces valeurs.

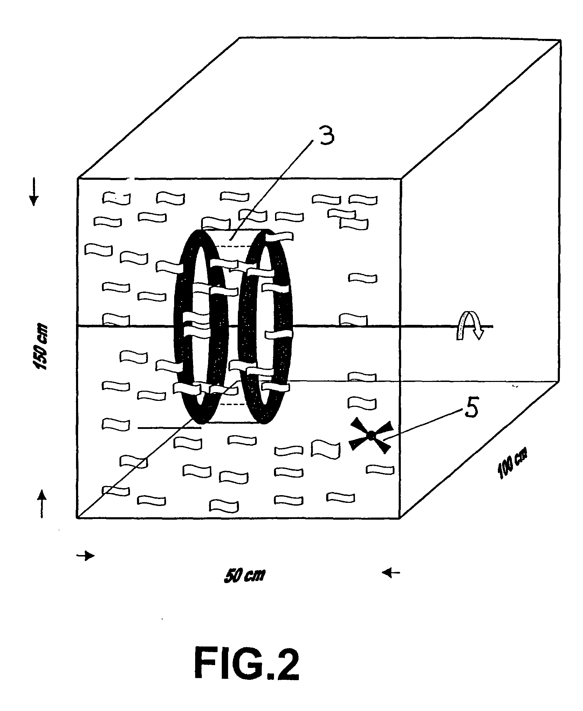

Pendant toute la durée du traitement de codéposition, la roue-support 3 tourne pour améliorer la régularité du dépôt, comme l'illustre la fig. 2, mais à vitesse suffisamment lente pour ne pas influencer négativement le processus de codéposition. Le bain est maintenu à température constante et constamment brassé (5) pour maintenir en suspension les particules de céramique. Les particules de céramique sont choisies parmi les particules mouillables par le bain chimique, inertes vis-à-vis des constituants précités du bain et essentiellement non-catalytiques, c'est-à-dire que le dépôt de la matrice à base de Nickel a lieu essentiellement sur la surface de la bande-lame et non pas à la surface des particules en suspension. Des particules d'oxide d'aluminium (alumine), de zirconium, de chrome, de carbure de silicium, de sulfure de molybdène sont des céramiques utilisables. On peut également utiliser des particules d'autres carbures ou de diamant. La quantité de particules mises en suspension varie généralement entre 5 et 50% du volume du bain. Pour des dépôts généralement compris entre 10 et 500 μm, et plus particulièrement 30 et 250 μm d'épaisseur, des particules de diamètre entre 0,5 et 10 μm conviennent. La proportion de particules dans le bain est ajustée de telle sorte à obtenir une proportion de particules dans le revêtement comprise entre 5 et 40 % en volume de celui-ci.

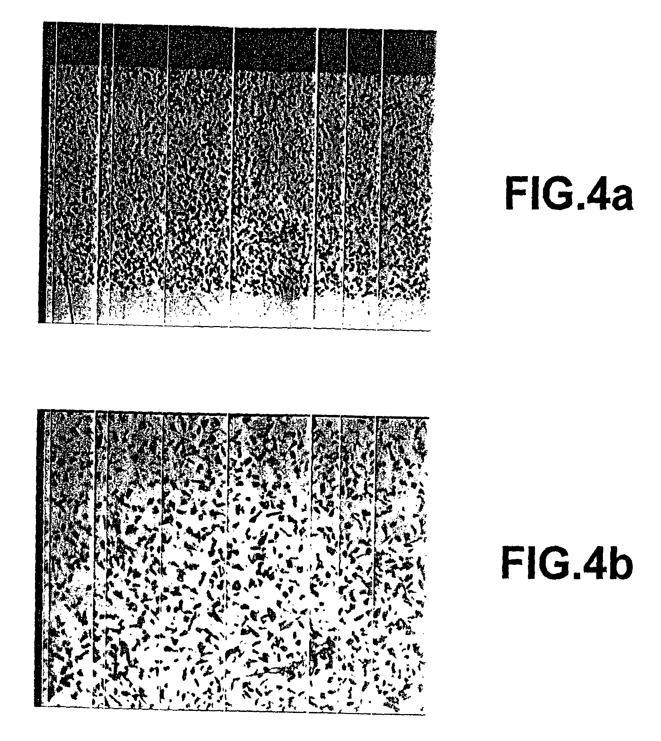

Les microphotographies de portions de revêtement des figures 4a et 4b montrent que la répartition des particules dans le revêtement est statistiquement homogène, d'où il résulte une homogénéité des propriétés macroscopiques de surface et notamment une homogénéité au niveau de l'usure de la lame après plusieurs heures de service.

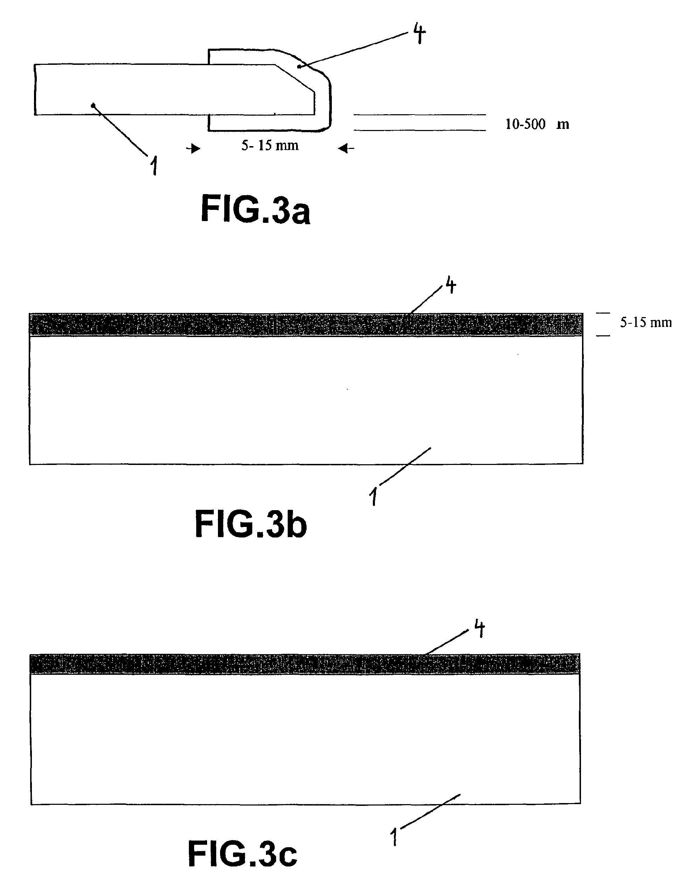

L'examen microscopique de coupes de lames, représentées schématiquement à la fig. 3a, montre également que le dépôt suit fidèlement la géométrie de la lame, que l'épaisseur du dépôt est homogène ; il n'y a pas de surépaisseurs ou d'absence de dépôt au niveau des angles de la lame d'acier, le dépôt forme un arrondi au niveau de ces angles. Il en résulte qu'il n'est pas nécessaire d'usiner la lame après le dépôt pour en rectifier le profil. Un polissage peut toutefois être effectué.

La partie fonctionnelle revêtue grâce au procédé de codéposition présente une dureté HV 0.1 de 500 à 800 unités. Toutefois, un traitement thermique entre 200 et 500°C après la codéposition améliore la dureté et l'adhérence du dépôt au substrat. La dureté HV 0.1 peut atteindre 1100 unités après traitement thermique et peut même dépasser 1300 unités.

Les caractéristiques des lames selon l'invention sont donc modulables par la nature, la granulométrie et la proportion des grains de céramique dans la matrice, la composition de la matrice elle-même et le traitement thermique post-déposition. Les propriétés des lames selon l'invention sont donc largement ajustables en fonction des applications, elles peuvent être aussi bien proches de celles d'une lame en acier non revêtue que de celles de lames revêtues exclusivement de céramique, ou encore être différentes des unes et des autres. Les exemples suivants montrent les propriétés comparatives de plusieurs lames.

Example 7 :

Comparaison d'une lame revêtue Ni-P-SiC avec une lame revêtue de céramique et une lame en acier non revêtue, en couchage en « mode raclant »

Conditions d'essai :
Couchage en ligne, tête de couchage avec porte-lame ABC (BTG Källe Inventing AB, Suède)
Type de papier : papier fin
Vitesse d'avancement du papier : 768 m/min
Sauce : 65% de matière solide (kaolin, $CaCo_3$)
Angle de travail : 20°
Poids de couche : 10 g/m$^2$, « couché une fois »
Caractéristiques de la lame Ni-P-SiC : longueur 3700 mm, épaisseur nominale 0,457 mm, revêtement 70 μm
Lames de comparaison :

a) Lame céramique « Duroblade » (TM de BTG Eclépens) de mêmes dimensions
b) Lame en acier de mêmes dimensions

Résultats :
durée de vie :

- lame acier : 8 heures,
- lame revêtue Ni-P-SiC : supérieure à 17 heures,
- lame revêtue de céramique : 24 heures

L'essai avec la lame revêtue Ni-P-SiC a été arrêté après 17 heures pour cause de panne de la machine de couchage alors que la lame n'était pas encore totalement usée.

Example 8 :

Comparaison d'une lame d'acier et d'une lame revêtue Ni-P-SiC en « mode lissant »

conditions d'essai :

- coucheuse Voith en mode lissant
- vitesse de couchage : 324-340 m/min
- lames utilisées en « top-couche »:
- angle du porte-lames : 24 °
- angle de travail : 5 à 6,5°
- type de sauce : 68% de solide à base de $CaCo_3$, viscosité 880 à 900 CPS
- lames :
- a) acier, longueur 4900 mm, épaisseur nominale 0,381 mm, revêtement Ni-P-SiC 70 μm
- b) acier, longueur 4900 mm, épaisseur nominale 0,381 mm, non revêtue

Résultats : le poids total de couche déposé est de 21 g/m$^2$, dont 12 g/m$^2$ en pré-couche et 9 g/m$^2$ en top-couche ; état de surface du papier couché : rugosité PPS = 1,03-1,36.
Le poids de couche reste quasiment constant, variant entre 21 et 23 g/m$^2$ en 20 heures de fonctionnement avec la lame Ni-P-SiC, alors que le poids de couche ne reste constant et l'état de surface du papier couché acceptable que pendant 8 à 10 heures avec la lame en acier.
La durée de vie de la lame revêtue Ni-P-SiC est donc le double de celle de la lame non revêtue. A noter que dans ces conditions opératoires, les lames revêtues de céramique ne permettent pas d'obtenir la qualité de papier couché exigé.

Example 9 :

Comparaison d'une lame revêtue Ni-P-SiC, d'une lame « Duroblade » à revêtement en céramique commercialisée par BTG Eclépens S.A. et d'une lame chromée du commerce.
Les substrats en acier des trois types de lames ont toutes les mêmes dimensions, à savoir épaisseur nominale 0,508 mm, largeur 100.0 mm, longueur 780 mm. La lame selon l'invention porte un revêtement Ni-P-SiC de 30 μm d'épaisseur, la lame céramique porte un revêtement de 150 microns d'épaisseur, la lame chromée porte un revêtement de chrome de 50 μm d'épaisseur.

Conditions d'essai :

- Porte lame ABC inversé, lame de pression à environ 5mm de la pointe de la lame avec « backing roll » de type 65 PJ de Trelleborg.
- Angles des lames : 30°
- Papier : fin, pâte chimique, précouché à 112 g/m$^2$, de type Multiart Silk

Sauce : 63% de solides, pour une viscosité de 1000-1200 cps ; le matériau solide comprend 30 parties d'argile (SPS) pour 40 parties de Kaolin ultrawhite (Engelhart), 30 parties de carbonate de calcium HC 90 (Omya), 14 parties de latex DL 950 (Dow), 0,20 parties de Kenores 1420 (Casco Nobel) et 0,30 parties de carboxyméthylcellulose CMC FF 10 (Metsa Serla).
La vitesse de couchage est maintenue à 500 m/min pour tous les essais.

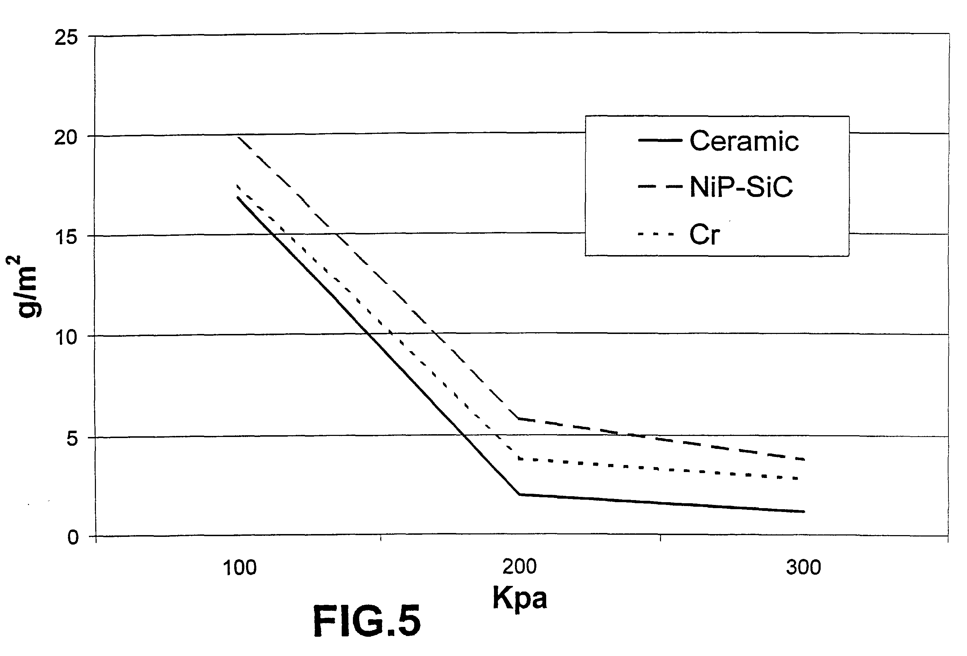

Dans un premier essai, la pression differentielle est ajustée successivement à 100, 200 et 300 kpa. La figure 5 montre en ordonnée les poids de couchage en g/m$^2$ obtenus pour les trois types de lames, la pression differentielle en Kpa étant en abscisse. A ces trois pressions differentielles on constate que la lame Ni-P-Sic permet un passage de sauce plus important que les deux autres matériaux, toutes conditions égales par ailleurs. La lame Ni-P-SiC permet donc un meilleur contrôle du profil de couche dans le « sens travers ».

Dans un deuxième essai, une bobine complète de papier a été couchée avec chaque type de lame en visant un poids de couche uniforme de 10 g/m$^2$. Dans ces conditions, il est plus difficile d'ajuster un poids de couche constant avec la lame chromée qu'avec les deux autres. L'examen de la forme de la pointe des lames chromées montre que leur géométrie n'est pas constante, d'où une variabilité du poids de couche. Les essais comparatifs de rugosité et de lissé du papier donnent les résultats résumés dans le tableau 1

| Type de lame | Lissé Bendtsen | Rugosité PPS |
|---|---|---|
| Céramique | 14 | 1,41 |
| Ni-P-SiC | 16 | 1,69 |
| Chrome | 38 | 1,85 |

Un test qualitatif de la couverture des fibres basé sur un test à l'encre Kroda donne le classement suivant :

1. lame revêtue Ni-P-Sic
2. lame céramique BTG-Eclépens
3. lame chromée

Les essais ci-dessus montrent que la lame revêtue Ni-P-SiC présente de très bonnes performances pour ce qui est de la qualité de la surface couchée. Il est surprenant de constater l'excellente qualité du papier couché, notamment l'absence de microstriures, obtenue avec les lames à revêtement Ni-P-SiC, alors que ce revêtement présente des particules dures discrètes, affleurant ou dépassant de la surface de la matrice Ni-P.

Avec une épaisseur de revêtement Ni-P-Sic faible, de l'ordre de 30 μm, la durée de vie de la lame n'est que légèrement supérieure à celle d'une lame en acier non revêtue, alors qu'avec un revêtement plus épais on approche la durée de vie d'une lame à revêtement céramique et ce avec des performances qualitatives supérieures.

## Revendications

1. Procédé de fabrication d'une lame de couchage **caractérisé en ce qu'**il comprend une étape de codéposition chimique d'un revêtement comprenant une matrice à base de nickel et des particules de céramique, de diamant ou de carbure sur la partie fonctionnelle d'une bande-lame en acier.

2. Procédé selon la revendication 1, **caractérisé en ce que** la bande-lame en acier est plongée dans un bain comprenant au moins un sel de nickel, un réducteur de Ni$^{++}$ et des particules de céramique d'un diamètre de 0,5 à 10 µm en suspension, choisies parmi les particules mouillables par le bain, inertes vis-à-vis de ses constituants et sensibilement non catalytiques.

3.  Procédé selon la revendication 2, **caractérisé en ce que** le bain comprend également des particules d'un lubrifiant solide en suspension, en particulier des particules de PTFE.

4.  Procédé selon l'une des revendications 2 ou 3, **caractérisé en ce que** la proportion des particules dans le bain est comprise entre 5 et 50% en volume.

5.  Procédé selon l'une des revendications 1 à 4, **caractérisé en ce que** ledit réducteur de $Ni^{++}$ est choisi parmi les hypophosphites, les aminoboranes et les borohydrures.

6.  Procédé selon l'une des revendications 1 à 5, **caractérisé en ce que** la bande lame subit une préparation avant l'étape de codéposition chimique, comprenant un nettoyage et/ou un dégraissage et/ou brossage et/ou un électropolissage et/ou une attaque anodique et/ou un masquage pour délimiter les portions de surface à revêtir.

7.  Procédé selon la revendication 6, **caractérisé en ce que** la bande lame est enroulée sur un support, en particulier une roue-support, en un enroulement hélicoïdal, les spires de l'enroulement étant séparées les unes des autres par une bande intercalaire constituée d'un matériau non-catalytique et inerte vis-à-vis des constituants du bain.

8.  Procédé selon la revendication 7, **caractérisé en ce que** le support de la bande lame enroulée est maintenu en mouvement pendant l'opération de codéposition.

9.  Procédé selon l'une des revendications 1 à 7, **caractérisé en ce que** après la codéposition, la bande lame est soumise à un traitement thermique.

10. Lame de couchage portant un revêtement comprenant une matrice à base de nickel et des particules de céramique, de diamant ou de carbure dispersées dans ladite matrice, au moins sur la partie fonctionnelle de ladite lame.

11. Lame selon la revendication 10, **caractérisée en ce que** ladite matrice comprend 5 à 11% en poids de P.

12. Lame selon la revendication 10, **caractérisée en ce que** la matrice comprend 2 à 6% en poids de B.

13. Lame selon l'une des revendication 10 à 12, **caractérisée en ce que** ledit revêtement contient 5 à 40% en volume de particules et présente une dureté HV 0.1 supérieure à 500.

14. Lame selon la revendication 13, **caractérisée en ce que** les particules de céramique sont choisies parmi les oxydes d'aluminium, de zirconium, de chrome, le carbure de silicium et le sulfure de molybdène.

15. Lame selon l'une des revendications 10 à 14, **caractérisée en ce que** ledit revêtement a une épaisseur de 10 à 500 µm et en particulier de 30 à 250 µm.

16. Lame selon l'une des revendication 13 à 15, **caractérisée en ce que** le revêtement comprend également des particules d'un lubrifiant solide, en particulier des particules en PTFE.

5 –15 mm

FIG1.b

2

1

FIG.1a

2

1

3

**FIG.2**

**FIG.3a**

**FIG.3b**

**FIG.3c**

FIG.4a

FIG.4b

**FIG.5**

EP 1 197 584 A1

# EP 1 197 584 A1

Office européen
des brevets

**RAPPORT DE RECHERCHE EUROPEENNE**

Numéro de la demande

EP 00 81 0931

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| X | EP 1 020 542 A (UYEMURA C & CO LTD) 19 juillet 2000 (2000-07-19) <br><br> * le document en entier * <br> --- | 1-5,10, 11,13, 14,16 | C23C18/16 |
| A | PATENT ABSTRACTS OF JAPAN vol. 015, no. 216 (C-0837), 4 juin 1991 (1991-06-04) & JP 03 064595 A (NOMURA TECHNO RES KK;OTHERS: 01), 19 mars 1991 (1991-03-19) * abrégé * <br> --- | 1-16 | |
| A | PATENT ABSTRACTS OF JAPAN vol. 017, no. 622 (C-1130), 17 novembre 1993 (1993-11-17) & JP 05 192629 A (MITSUBISHI HEAVY IND LTD), 3 août 1993 (1993-08-03) * abrégé * <br> ----- | 1-16 | |

**DOMAINES TECHNIQUES RECHERCHES (Int.Cl.7)**

C23C

Le présent rapport a été établi pour toutes les revendications

| Lieu de la recherche | Date d'achèvement de la recherche | Examinateur |
|---|---|---|
| LA HAYE | 27 mars 2001 | Van Leeuwen, R |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

14

**ANNEXE AU RAPPORT DE RECHERCHE EUROPEENNE
RELATIF A LA DEMANDE DE BREVET EUROPEEN NO.**

EP 00 81 0931

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

27-03-2001

| Document brevet cité au rapport de recherche | Date de publication | Membre(s) de la famille de brevet(s) | Date de publication |
|---|---|---|---|
| EP 1020542 A | 19-07-2000 | JP 2000204482 A | 25-07-2000 |
| JP 03064595 A | 19-03-1991 | JP 2583611 B | 19-02-1997 |
| JP 05192629 A | 03-08-1993 | AUCUN | |

EPO FORM P0460

Pour tout renseignement concernant cette annexe : voir Journal Officiel de l'Office européen des brevets, No.12/82